# EUROPEAN PATENT APPLICATION

(11) **EP 2 140 967 A1**
(43) Date of publication of application: **06.01.2010**
(21) Application number: 08012049.6
(22) Date of filing: 03.07.2008
(51) Int. Cl.: B23K 31/02, B23K 37/02, E04H 12/00, F03D 1/00, B23K 37/04

(54) **Method of welding a semi-finished elongated product of sheet metal sections and handling arrangement for carrying and pivoting a semi-finished elongated product of sheet metal sections**

(71) Applicant: Hendricks Industries ApS, 7400 Herning (DK)
(72) Inventor: Nuhbegovic, Tarik, 7400 Herning (DK)
(74) Representative: Wittrup, Flemming

(57) **Abstract**

The present invention relates to a method for welding a semi-finished elongated module (1) of sheet metal sections (2) showing a closed or partly closed profile and arranged to be used in a wind power structure and a handling arrangement to be used in such producing activities. The method comprises to lift the semi-finished module (1) to facilitate a pivotal movement thereof, position the semi-finished module (1) for welding by pivoting it about a rotational axis arranged extending in a general direction of said elongated module (1) and inside its profile, and to performing the welding operation. The handling arrangement comprises a first supporting device arranged (4) to carry the elongated module (1) at a first short side, a second supporting device (4) arranged to carry the elongated module (1) at an opposite short side, and means (13,14) for controllably pivoting the module about a rotational axis extending between said first and second supporting device (4) and inside the module's (1) profile.

## Description

### FIELD OF THE INVENTION

The present invention relates to a method for welding a semi-finished elongated module of sheet metal sections showing a closed or partly closed profile and arranged to be used in a wind power structure and a handling arrangement to be used in such producing activities.

### BACKGROUND OF THE INVENTION

It is known to produce modules from preformed sheet metal, which modules then are used in the further production of the structure in a wind power plant. Such modules are known to be bulky and heavy; too bulky and too heavy to be handled by hand.

The shape of such a module can be explained as having an extension in a longitudinal direction and a profile in a cross section orthogonally to the longitudinal direction.

The module typically shows a closed or partly closed profile, depending on if it is intended to go all around the structure profile (which e.g. can be the case for some tower modules), or if it is intended to be united with one or more other modules to go all around. A closed shape can e.g. be a pipe shape (360° profile extension). A partly closed profile is a module where the profiles show free ends that do not reach each other; e.g. be a half pipe (180° profile extension) or a any other desired degree of extension depending on intended structure profile design.

It is common that structure profiles show a circular basic shape, but it should be understood that such profiles can also show other basic shapes or combinations thereof, e.g. be circular, elliptical, rectangular, hexagonal or combinations thereof and combined with linear elements. The profile will usually also vary depending on position in the longitudinal direction.

It is also known that the module can be provided with openings, collars, fittings, flanges and the like as well as enforcing structural elements, and they will therefore not be further discussed.

When producing such a module, it comprises to preform sheet metal segments to represent a desired profile and to weld a number of such segments together, end to end, to form the module. Even those sheet metal segments are bulky and heavy; too bulky and too heavy to be handled by hand. It is common that the intended structure profile shows general diameters in the interval from 2,5 up to 10 meters.

Before welding, the preformed metal segments are placed in position relative to each other on a support. During final welding, the welder will have to walk or climb on the segments or inside the segments to be able to perform all-welded joints between adjacent segments in the module. The welding operation is therefore also a time-consuming activity.

Needless to say, it is a prerequisite to have high quality welding joints in a wind power plant and therefore also a challenge to perform high quality welding operations at all angles that the module present.

### OBJECT AND SUMMARY OF THE INVENTION

It is therefore an object of the present invention to provide a method for, and a handling arrangement to be used when, welding such modules and that solves or at least alleviates to some extent the above-mentioned challenges or disadvantages.

This is achieved by a method and a handling arrangement according to the attached independent claims.

Thus, an embodiment of the present invention concerns a method for welding a semi-finished elongated module of sheet metal sections that shows a closed or partly closed profile and is arranged to be used in a wind power structure, e.g. as modules in a tower or in a turbine housing, said method comprising lifting the semi-finished module to facilitate a pivotal movement thereof, positioning the semi-finished module for welding by pivoting it about a rotational axis arranged extending in a general direction of said elongated module and inside its profile, and performing the welding.

By facilitating a pivotal movement of the module, all welding operations on the module can be performed at a working position that is favourable from a welding quality and welding speed perspective. It is known for example that welding from below is slow and difficult and welding downwards, e.g. down a slope, is not allowed in this context.

In another embodiment, the pivoting of the module facilitates that the entire welding operation can be performed from above, which is positive from a quality perspective.

And in an alternative embodiment, pivoting facilitates that the next immediate distance to be welded can be positioned at an angle to a horizontal plane that is within an interval from 0° to 90°, meaning that the welding is performed in a horizontal plane or upwards, in an upward slope.

In a different embodiment, the welding is performed while the semi-finished module is pivoting. And in still another embodiment, the welding is performed at a welding speed controlled by the pivoting movement of the module. This can help to speed up the welding process and control the welding quality. Also, it can improve the welder's body position.

In another embodiment the rotational axis is arranged horizontally. This can provide favourable balancing of the module.

In another embodiment the rotational axis is arranged in a way that it runes through the modules centre of mass.

In another embodiment, the rotational axis is arranged in a relatively balanced position relative to the module such that the maximum torque needed to perform a full 360° rotation of the module is within 25 %, preferably within 10 %, from the theoretical minimum torque required. Given that the modules are bulky and heavy, the energy needed to bring about the pivotal movement is of course also related to the mass. Also, the forces needed to lock the module in different positions are related to the torque needed to pivot. Both the need for strong breaking equipment and high energy for pivoting are reduced if the module can be balanced.

In carrying out this method, a handling arrangement can be used that comprises a first supporting device arranged to carry the elongated module at a first short side, a second supporting device arranged to carry the module at an opposite short side, and means for controllably pivot the module about a rotational axis extending between said first and second supporting device and inside the modules profile. This arrangement facilitates the sought after pivotal movement of the module.

In a further embodiment, the supporting devices each comprises a supporting structure supporting an axle suspension arrangement, whereas the supporting devices each further comprises a gripping means arranged to be realisably attached to a short side of a module and showing a stub axle protruding in a direction from the module when attached, and said stub axle is arranged to be suspended in the axle suspension arrangement of a supporting device.

In another embodiment, a controllable driving means is arranged to apply a torque to controllably pivot the module. In yet another embodiment, a remote control unit is arranged to control the pivotal movement of the module, e.g. as to speed and direction and can be wireless or connected via a cable. With such remote, a welder can control the direction and speed from where the welder is working, and it is also possible to control and fine-tune speed while welding.

In another embodiment, at least one of the supporting devices comprises means to adjust the elevation of the module's rotational axis. And in a further embodiment, if the length of the stroke is enough and if both supporting devices are equipped, there will be no need for external lifting capacity, such as cranes or lift trucks, to lift the semi-finished module free of its initial support and later lift the all-welded module back down again. This lifting operation can be performed by the supporting devices.

In another embodiment the gripping means comprises adjustment means arranged to facilitate the adjustment of the stub axle position in relation to the modules profile. This will facilitate fine-tuning of the rotational axel in relation to the module's profile.

The present invention will be explained in more detail hereinafter on the basis of a detailed description of an embodiment of the invention, which embodiment is meant solely by way of example. In the following description thereof, reference is made to the appended drawings, in which:

### BRIEF DESCRIPTION OF THE DRAWINGS

Figure 1 schematically shows an elevated module placed in an arrangement according to a first embodiment of the present invention.
Figure 2 schematically shows the same arrangement with the module pivoted into a different position.
Figure 3 schematically shows a detailed view of parts of a supporting device according to an embodiment of the invention.
Figure 4 schematically shows a gripping means according to an embodiment of the invention.

### DESCRIPTION OF PREFERRED EMBODIMENTS

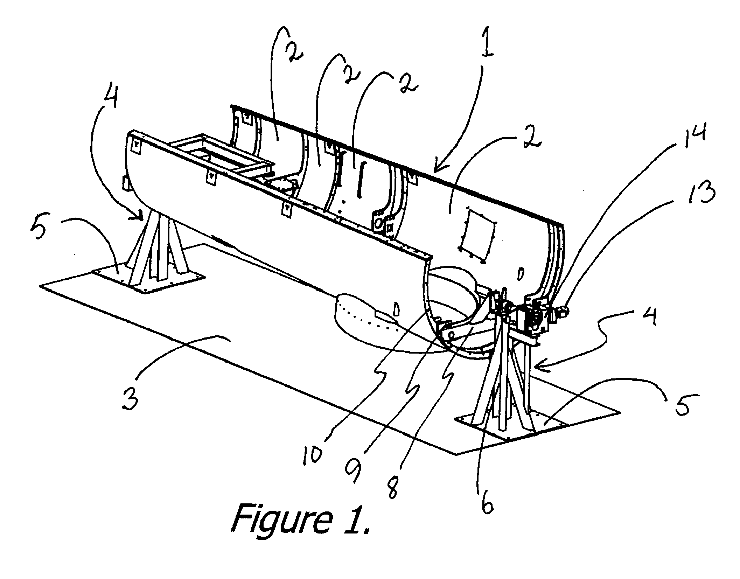

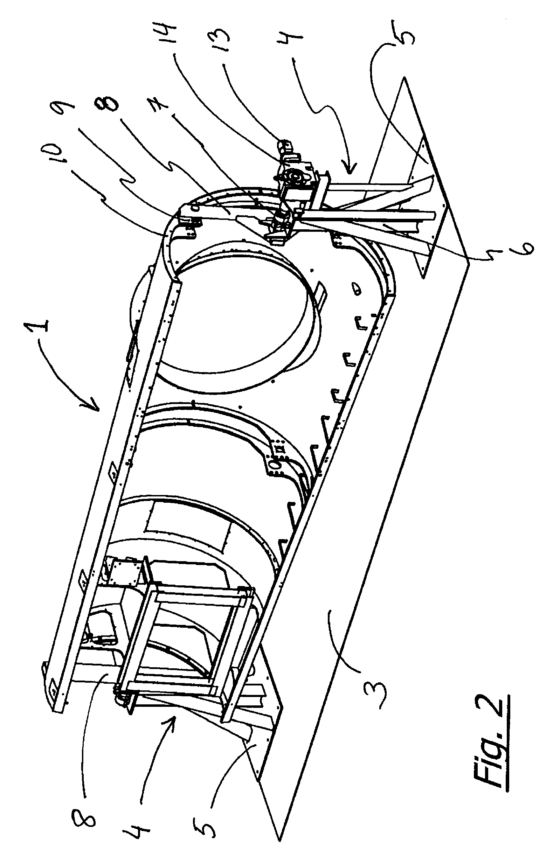

### With reference to figures 1 and 2:

A semi-finished module 1 intended to be used as nacelle has been produced by placing segments 2 of sheet metal, one after another, in a longitudinal direction on a support, which in this example is the floor 3 before spot welding the adjacent edges to form the semi-finished module 1. The term semi-finished is used for a module where the individual segments have been put in place relative to each other and have been preliminary fixated to each other, e.g. by spot welding, partly performed welds or other securing means. The term does not have any direct connection to the amount of work completed and remaining.

The segments in this module all show a general half-pipe shaped profile, but the radius differs depending on position in the longitudinal direction; it is increasing to the right in figures 1 and 2.

Further, one round and two rectangular openings are arranged in the module. The round opening is arranged to receive the upper end of a wind power plant tower and the rectangular openings are arranged for service and safety reasons.

To complete the welding of the module 1, welding operations need to be performed both on the outside (convex surface) and on the inside (concave surface) of the module. To perform this efficiently we need to be able to handle the bulky and heavy module in a way such that we can position the immediate area to be welded in a favourable position. According to an embodiment of the present invention, we like to position the semi-finished module free of its initial support 3 and to facilitate a pivotal movement to position the module 1 so that the immediate next coming distance to be welded can be positioned in a way such that efficient welding can be performed, both from a quality and a productivity perspective.

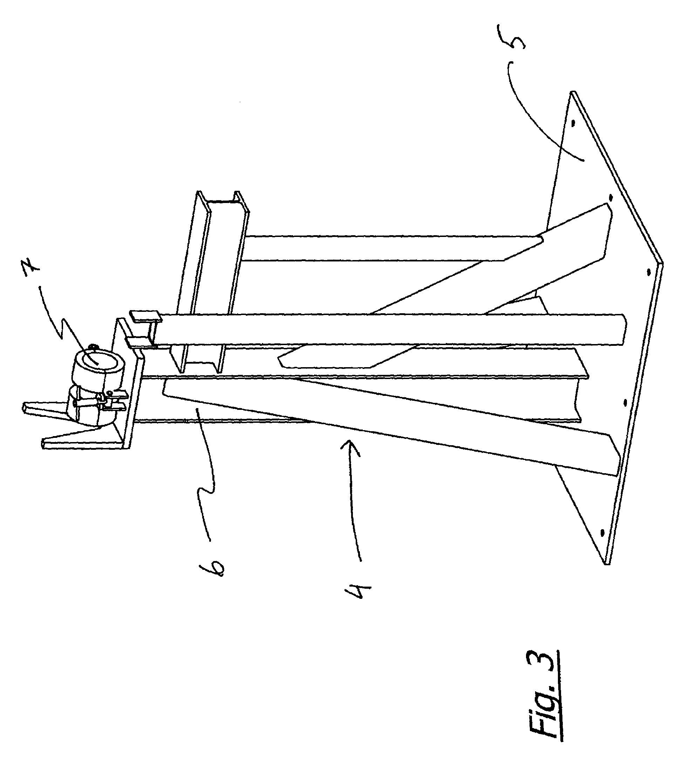

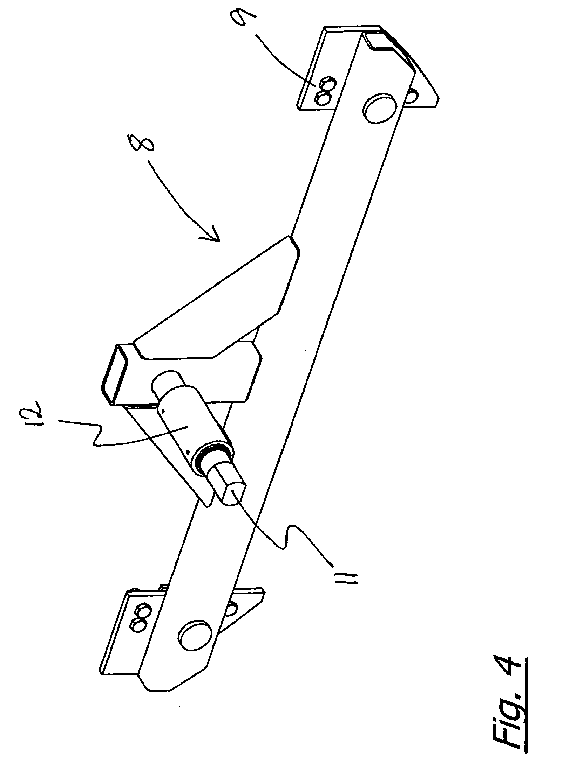

Now, also with reference to figures 3 and 4:

In an embodiment, a handling arrangement is arranged to facilitate the positioning. The handling arrangement comprises two supporting devices 4 arranged one at each short side of the semi-finished module.

Each supporting device comprises a foundation 5 in the form of a bottom plate fixed to the ground 3 by bolts to a concrete floor. From the foundation 5, a pillar 6 or framework is extending vertically upwards and, at a distance to the foundation, carries an axle suspension arrangement in the form of a seating 7 arranged to receive a bearing or axle.

Further, each supporting device comprises a releasable attached gripping means 8. The gripping means is realisably attachable to a short side of a module; in this embodiment by a bolt joint 9 using existing holes in an existing flange 10 at the short side edge of the module. The gripping means further comprises a stub axle 11 protruding in a direction from the module 1 when attached thereto and provided with a bearing 12 arranged to be suspended in the seating 7.

In the present embodiment, one of the supporting devices further comprises a controllable driving means; in the form of an electric motor 13, a gear box 14 and control means. The control means is arranged to control the speed and direction of the electric motor and comprises a wireless remote control. The gear box 14 is thus arranged to transmit a controlled torque to the stub axle 11 from the electric motor 13 by having an output shaft that is complementary configured and arranged to receive the stub axle 11 in a torsion rigid connection. In the embodiment of figure 4, the free end of the axle 11 shows a square profile shape possible to be received by a complementary configured coupling arrangement at the gearbox.

By providing the part of the gripping means arranged to form part of the bolt joint 9 with an excess number of drilled holes or slots, it is possible to arrange the gripping means in alternative positions relative to the module's short side, e.g. the flange 10. Since the stub axle 11 is fixed in relation to the part of the gripping means that form part of the bolt joint 9, as a result the stub axle's 11 position in relation to the module's profile will be possible to adjust and thus the module's rotational axis.

If we want to pivot the module around a lengthwise extending axis using as little energy (small electric motor) as possible, we need to adjust the rotational axis so that in pivoting/revolving the module a full 360°, the maximum torque needed will be as low as possible.

Since we seldom have a symmetric module, an axis position that completely balances the module in all positions is not always to be found, but it is possible to calculate or by tests decide a near optimal positioning.

Further, in this embodiment the axis of rotation is arranged horizontally. This is done by having the pillars 6 carrying the seatings 7 at the same distance from the horizontal floor 3.

Using this handling arrangement, the module can be pivoted and adjusted so that all welding operations can be performed from above and, if desired, while the module is pivoting.

Also, using the remote control, a welder can perform the welding and at the same time control the speed and direction of the pivoting. It is also possible for a welder to be still and let the welding speed be controlled by the pivoting movement of the module.

In the first embodiment above, the semi-finished module is provided with a gripping means 8 at both its short sides. The gripping means is bolted 9 to the flange 10. Then the module 1 is lifted by a crane and the stub axels 11, protruding in opposite directions and away from the module one at each short end of the module, are positioned in the seatings 7 and secured in radial directions, preferably also in axial directions.

In a further embodiment, the supporting devices can comprise means to adjust the elevation of the module's rotational axis. Such means can be incorporated in the pillars and comprise hydraulic cylinders or other techniques known in the art for lifting heavy objects.

In working on this invention, another advantage has been noted. The heat generated while welding affects the metal and can sometimes cause problems to keep the module within tolerances. We have noted that modules which are welded in an arrangement according to the present invention stays within tolerances, probably due to the fact that the supporting devices are fixed to the floor and able to pick up axial forces; thus counteracting the heat-caused expansion of the module from minor deformation and interrelated movements of the sections 2.

In the claims, any reference signs placed between parentheses shall not be constructed as limiting the claim. The word "comprising" does not exclude the presence of elements or steps other than those listed in a claim. The word "a" or "an" preceeding an element does not exclude the presence of a plurality of such elements.

The invention can be implemented by means of hardware comprising several distinct elements and by means of a suitably programmed computer. In a further embodiment, a welding robot is provided to cooperate with the arrangement providing the pivotal movement of the module. Hereby at least some of the welding can be fully automated. Software can be used as means to control the cooperation between the welding robot and the pivotal movement.

The term "sheet metal" in this context it is to be understood as metal formed into thin and flat pieces. It is a fundamental form used in metalworking. The thickness of the sheet metal can vary from e.g. 4 mm to e.g. 50 mm and will therefore also comprise thicknesses what sometimes are generally referred to as plate metal.

The term elongated is used to describe a general shape that is longer in a longitudinal direction that it is wide, in a direction perpendicular to said longitudinal direction. In this context, how much longer is not relevant.

The term turbine housing is here used as a general description of the housing placed at the top of a tower in a wind power plant. It therefore comprises both the nacelle, which refers to the structure that holds the generating components, gearbox, drive train, etc., and the canopy, which is a term that is sometimes used for an overhead roof or structure that provides shelter for the generating components in the nacelle.

## Claims

1. Method for welding a semi-finished elongated module of sheet metal sections showing a closed or partly closed profile and arranged to be used in a wind power structure, said method comprising;
- lifting the semi-finished module to facilitate a pivotal movement thereof,
- positioning the semi-finished module for welding by pivoting it about a rotational axis arranged extending in a general direction of said elongated module and inside its profile, and
- performing the welding.

2. Method according to claim 1, wherein all the welding operation is performed from above.

3. Method according to claim 1 or 2, wherein the welding is performed while the semi-finished module is pivoting.

4. Method according to any of the claims 1 to 3, wherein the welding is performed at a welding speed controlled by the pivoting movement of the module.

5. Method according to any of the claims 1 to 4, wherein the rotational axis is arranged horizontally.

6. Method according to any of the claims 1 to 5, wherein the rotational axis is arranged in a way such that it runes through the module's centre of mass.

7. Method according to any of the claims 1 to 5, wherein the rotational axis is arranged in a relatively balanced position relative to the module such that the maximum torque needed to perform a full 360° rotation of the module is within 25 % from the theoretical minimum torque required.

8. Method according to any of the claims 1 to 5, wherein the rotational axis is arranged in a relatively balanced position relative to the module such that the maximum torque needed to perform a full 360° rotation of the module is within 10 % from the theoretical minimum torque required.

9. Handling arrangement arranged to be used in welding a semi-finished elongated module of sheet metal sections showing a closed or partly closed profile and arranged to be used in a wind power structure, wherein
the arrangement comprises a first supporting device arranged to carry the elongated module at a first short side, a second supporting device arranged to carry the module at an opposite short side, and means for controllably pivoting the module about a rotational axis extending between said first and second supporting device and inside the module's profile.

10. Handling arrangement according to claim 9, wherein the supporting devices each comprises a supporting structure supporting a axle suspension arrangement, wherein the supporting devices each further comprises a gripping means arranged to be realisably attached to a short side of a module and showing a stub axle protruding in a direction from the module when attached, and said stub axle is arranged to be suspended in the axle suspension arrangement.

11. Handling arrangement according to any of the claims 9 to 10, wherein a controllable driving means is arranged to apply a torque to controllably pivot the module.

12. Handling arrangement according to claim 11, wherein a remote control unit is arranged to control the pivotal movement of the module.

13. Handling arrangement according to any of the claims 9 to 12, wherein at least one of the supporting devices comprises means to adjust the elevation of the module's short end.

14. Handling arrangement according to any of the claims 10 to 13, wherein the gripping means comprises adjustment means arranged to facilitate the adjustment of the rotational axis in relation to the modules profile.
